(19) Europäisches Patentamt / European Patent Office / Office européen des brevets

(11) **EP 3 328 736 B1**

(12) **FASCICULE DE BREVET EUROPEEN**

(45) Date de publication et mention de la délivrance du brevet:
**28.11.2018 Bulletin 2018/48**

(21) Numéro de dépôt: **16763887.3**

(22) Date de dépôt: **28.07.2016**

(51) Int Cl.:
**B64G 1/10** *(2006.01)*    **G06Q 10/06** *(2012.01)*

(86) Numéro de dépôt international:
**PCT/FR2016/051963**

(87) Numéro de publication internationale:
**WO 2017/017384 (02.02.2017 Gazette 2017/05)**

(54) **PROCÉDÉ DE PLANIFICATION D'ACQUISITION D'IMAGES DE ZONES TERRESTRES PAR UN ENGIN SPATIAL**

VERFAHREN ZUR PLANUNG DER ERFASSUNG VON BILDERN VON GEBIETEN DER ERDE DURCH EIN RAUMFAHRZEUG

METHOD FOR PLANNING THE ACQUISITION OF IMAGES OF AREAS OF THE EARTH BY A SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2015 FR 1557215**

(43) Date de publication de la demande:
**06.06.2018 Bulletin 2018/23**

(73) Titulaire: **Airbus Defence and Space SAS**
**31402 Toulouse Cedex 4 (FR)**

(72) Inventeur: **BLANC-PÂQUES, Pierre**
**31402 Toulouse Cedex 4 (FR)**

(74) Mandataire: **Ipside**
**6, Impasse Michel Labrousse**
**31100 Toulouse (FR)**

(56) Documents cités:
**FR-A1- 3 011 322    FR-A1- 3 011 339**
**FR-A1- 3 016 719**

• **BAOLIN SUN ET AL: "<title>Satellite mission scheduling algorithm based on GA</title>", PROCEEDINGS OF SPIE, vol. 6795, 10 novembre 2007 (2007-11-10), pages 67950U-67950U-6, XP055127628, ISSN: 0277-786X, DOI: 10.1117/12.772982**
• **THIERRY BENOIST ET AL: "Upper bounds for revenue maximization in a satellite scheduling problem", 4OR, vol. 2, no. 3, 1 octobre 2004 (2004-10-01) , pages 235-249, XP055127625, ISSN: 1619-4500, DOI: 10.1007/s10288-004-0044-8**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE TECHNIQUE

La présente invention appartient au domaine de l'imagerie terrestre par des engins spatiaux, tels que des satellites d'observation, et concerne plus particulièrement un procédé de planification d'acquisition d'images de zones terrestres par un engin spatial ou une constellation de tels engins spatiaux. L'invention trouve une application particulièrement avantageuse, bien que nullement limitative, dans le cas de satellites d'observation fonctionnant selon un mode d'acquisition d'images par bandes, mode désigné par la suite dans le texte par le terme « peigne » connu de l'homme de l'art (mode encore dit « pushbroom » en référence à la littérature anglo-saxonne).

## ÉTAT DE LA TECHNIQUE

Les missions d'observation terrestre effectuées par un engin spatial consistent à acquérir des images de zones terrestres, c'est-à-dire situées à la surface de la Terre, en réponse à des requêtes de clients, cf. le document XP055127628. En particulier, un tel engin spatial suit une orbite défilante autour de la Terre de sorte à être en mesure d'acquérir lesdites zones terrestres lorsqu'il les survole pendant une durée prédéterminée. En outre, le développement de l'agilité d'un tel engin spatial permet d'accroître le nombre de zones terrestres imagées, ces dernières pouvant désormais être situées de part et d'autre de la dite orbite ou bien acquises sous différents angles au cours de plusieurs orbites. Ainsi, à tout instant le long de ladite orbite défilante correspond une ou plusieurs opportunités d'acquisition d'images de zones terrestres différentes.

La réception desdites requêtes par l'engin spatial s'effectue de manière régulière, généralement sur une base journalière. Actuellement, les requêtes pour de telles acquisitions de zones terrestres sont en nombre croissant, car non plus limitées uniquement aux seuls secteurs industriels historiquement liés au secteur de l'imagerie spatiale. Par exemple, et à titre non limitatif, le secteur de l'agriculture fait désormais un usage important d'observations terrestres dans le but d'optimiser l'exploitation de surfaces agraires.

Dès lors, le nombre de requêtes à traiter par un tel engin spatial ne cesse d'augmenter, ce qui est aussi le cas de leur complexité dans la mesure où ces requêtes comportent des contraintes bien précises associées à la zone terrestre devant être acquise, comme par exemple des conditions de localisation, d'exposition lumineuse, ou encore de nécessité d'acquisitions multiples dans le but d'obtenir des images stéréo, tri-stéréo ou multibandes. A cela s'ajoute aussi le fait que les requêtes sont différentiables selon leur niveau de priorité.

La gestion des contraintes associées auxdites requêtes doit aussi être envisagée en parallèle de la gestion de contraintes d'exploitation associées audit engin spatial, qu'elles soient de type cumulatives (taille mémoire, puissance électrique consommée, temps maximum de fonctionnement d'instruments embarqués), ou bien encore de type locales (durée minimale entre deux acquisitions successives).

On comprend donc que l'objectif consistant à satisfaire un ensemble de telles requêtes est un problème très fortement contraint nécessitant la planification dans le temps, selon l'orbite dudit engin spatial, des prises de vues à effectuer. Plus largement, une telle problématique s'inscrit dans la classe des problèmes d'optimisation dit du « voyageur de commerce », bien connus pour être très difficiles à résoudre en un temps raisonnable.

Le problème est particulièrement critique dans le cas où la demande de l'utilisateur doit être satisfaite dans un délai court. L'augmentation du nombre de satellites donne la possibilité d'avoir des accès satellites sur une zone dans des délais beaucoup plus courts. Cependant cette capacité ne peut être pleinement utilisée que si la mise à jour du plan d'acquisition peut également se faire dans des délais courts.

S'il est néanmoins connu qu'un tel problème de planification admet des solutions d'approximation de bonne qualité grâce à des techniques heuristiques d'optimisation (par exemple de type gloutonnes), leurs temps de calcul n'apportent pas satisfaction eu égard au volume de requêtes à traiter en conditions opérationnelles.

Plus récemment, des techniques de résolution basées sur des hypothèses de simplifications importantes, notamment concernant une gestion découplée des contraintes locales et cumulatives dudit engin, ont permis d'apporter en temps raisonnable des solutions à la gestion desdites contraintes locales , ce qui est une première étape avant la résolution globale dudit problème de planification. Si certaines de ces techniques permettent effectivement de prendre en compte les contraintes cumulatives, aucune d'entre elles ne permet toutefois de prendre en compte l'acquisition d'images stéréo, tri-stéréo ou multibandes, notamment dans le cas d'un satellite d'observation fonctionnant en mode peigne. Par conséquent, ces techniques sont limitatives et non optimales quant au nombre de requêtes qu'elles peuvent satisfaire.

## EXPOSÉ DE L'INVENTION

La présente invention a pour objectif de remédier à tout ou partie des inconvénients de l'art antérieur, notamment ceux exposés ci-avant, en proposant une solution qui permette d'avoir un procédé de planification optimal quant à la satisfaction de contraintes locales et cumulatives d'un engin spatial et qui permette de prendre en compte des zones terrestres nécessitant d'être acquises une pluralité de fois ou bien encore une seule fois.

A cet effet, l'invention concerne un procédé de planification d'acquisition d'images de zones terrestres $Z_1,...,Z_N$, par un engin spatial en mission autour de la Terre suivant une orbite défilante prédéterminée, comme par exemple un satellite d'observation, chaque zone terrestre $Z_i$ étant associée à une requête $R_i$ de sorte qu'à ladite zone $Z_i$ correspond un intervalle temporel d'accessibilité visuelle Ti le long de ladite orbite défilante, $1 \leq i \leq N$. En outre, ledit procédé comporte les étapes successives suivantes :

- une étape de détermination pour chaque intervalle $T_i$ d'opportunités d'acquisition discrètes de la zone $Z_i$ de sorte qu'à chaque dite opportunité d'acquisition discrète sont associées une date de début incluse dans ledit intervalle $T_i$, une durée d'exécution, une contrainte locale cinématique ainsi qu'un poids,
- une étape de regroupement des opportunités d'acquisition discrètes des zones $Z_i$ dans un ensemble D,
- une étape de classement des opportunités d'acquisition discrètes de l'ensemble D, les opportunités d'acquisition étant classées par date de début croissante et désignées par $D^i$,

- une étape d'évaluation de compatibilité cinématique entre lesdites opportunités d'acquisition discrètes de l'ensemble D, prises deux à deux selon leurs classements respectifs,
- une étape de détermination d'une séquence optimale d'opportunités d'acquisition discrètes ayant un poids maximal, et compatible cinématiquement.

Dans des modes particuliers de mise en oeuvre, le procédé de planification d'acquisition d'images de zones terrestres comporte l'une ou plusieurs des caractéristiques suivantes, prises isolément ou selon toutes les combinaisons techniquement possibles.

Dans un mode particulier de mise en oeuvre, le procédé comporte une étape de prise en compte de requêtes d'acquisitions multiples, consécutive à l'étape d'évaluation de compatibilité cinématique et antérieure à l'étape de détermination d'une séquence optimale, dans laquelle les poids respectifs des opportunités d'acquisition discrètes associées à des zones $Z_i$ devant être acquises une pluralité de fois sont mis à jour et dans laquelle une variable *mustHit* force l'enchaînement desdites opportunités d'acquisition discrètes afin de satisfaire lesdites requêtes d'acquisitions multiples.

Dans un mode particulier de mise en oeuvre, l'étape de détermination d'une séquence optimale comporte la mise à jour dynamique d'une variable pathMesh stockant les zones $Z_i$ associées aux opportunités d'acquisition discrètes de ladite séquence, de sorte à empêcher la duplication d'opportunités d'acquisition discrètes de zones devant être acquises une seule fois.

Dans un mode particulier de mise en oeuvre, l'étape de détermination d'une séquence optimale comporte pour chaque opportunité d'acquisition discrète $D^i$ de l'ensemble D une sélection partielle d'opportunités d'acquisition discrètes précédant $D^i$ dans D, et compatibles cinématiquement avec $D^i$, parmi toutes les opportunités d'acquisition discrètes précédant $D^i$ dans D, et compatibles cinématiquement avec $D^i$.

Dans un mode particulier de mise en oeuvre, le procédé comporte une étape de vérification de respect d'au moins une contrainte cumulative imposée audit engin spatial, ladite étape de vérification étant consécutive à l'étape de détermination d'une séquence optimale.

Dans un mode particulier de mise en oeuvre, ladite au moins une contrainte cumulative comporte une contrainte de taille mémoire.

Dans un mode particulier de mise en oeuvre, ladite au moins une contrainte cumulative comporte une contrainte de puissance électrique consommée.

Dans un mode particulier de mise en oeuvre, ladite au moins une contrainte cumulative comporte une contrainte de temps maximum de fonctionnement d'instruments embarqués dans ledit engin.

Dans un mode particulier de mise en oeuvre, l'étape de vérification de respect de contraintes cumulatives comporte une mise à jour dynamique de ladite séquence optimale par suppression d'opportunités d'acquisition discrètes, tant que lesdites contraintes cumulatives ne sont pas satisfaites.

Dans un mode particulier de mise en oeuvre, les dates de début des opportunités d'acquisition discrètes de chaque intervalle $T_i$ sont échantillonnées temporellement selon un pas de temps constant.

Dans un mode particulier de mise en oeuvre, les pas de temps respectifs des intervalles $T_1,...,T_N$ sont égaux entre eux.

Dans un mode particulier de mise en oeuvre, les pas de temps respectifs d'au moins deux intervalles $T_i$ et $T_j$ sont différents.

Dans un mode particulier de mise en oeuvre, le pas de temps de chaque intervalle $T_i$ est ajusté de sorte que ledit intervalle $T_i$ est associé à 20 opportunités d'acquisition discrètes.

Dans un mode particulier de mise en oeuvre, la contrainte locale cinématique d'une opportunité d'acquisition discrète comporte une consigne d'attitude dudit engin spatial au début et à la fin de ladite opportunité d'acquisition discrète.

Dans un mode particulier de mise en oeuvre, le poids de chaque opportunité d'acquisition discrète associée à une zone $Z_i$ dépend de la priorité de la requête $R_i$ associée à ladite zone $Z_i$.

Dans un mode particulier de mise en oeuvre, chaque zone $Z_i$ est associée à un critère qualité $w_i$ dépendant des caractéristiques géométriques de ladite zone $Z_i$ ainsi que des conditions météorologiques prévues au cours de l'intervalle temporel d'accessibilité visuelle Ti.

Dans un mode particulier de mise en oeuvre, le poids de chaque opportunité d'acquisition discrète associée à une zone $Z_i$ dépend de la priorité de la requête $R_i$ de sorte à être un vecteur dont la seule composante non nulle est égale au critère qualité $w_i$, la position de ladite composante non nulle dans ledit vecteur dépendant de la priorité de ladite requête $R_i$.

Dans un mode particulier de mise en oeuvre, ladite composante non nulle dépend du critère qualité $w_i$ et d'un critère d'intérêt d'acquisition associé à ladite opportunité d'acquisition discrète.

Dans un mode particulier de mise en oeuvre, l'étape de détermination d'une séquence optimale comporte une comparaison des poids respectifs des opportunités d'acquisition discrètes compatibles cinématiquement entre elles.

Dans un mode particulier de mise en oeuvre, le procédé comporte une étape d'agrégation de zones terrestres, antérieure à l'étape de détermination d'opportunités d'acquisition discrètes.

Dans un mode particulier de mise en oeuvre, ledit engin spatial est un satellite d'observation fonctionnant en mode peigne.

## PRÉSENTATION DES FIGURES

Les caractéristiques et avantages de l'invention seront mieux appréciés grâce à la description qui suit, description qui expose les caractéristiques de l'invention au travers de modes de mise en oeuvre préférés, qui n'en sont nullement limitatifs.

La description s'appuie sur les figures annexées qui représentent :

- Figure 1 : une représentation d'un organigramme d'un exemple de mise en oeuvre d'un procédé de planification d'acquisition d'images de zones terrestres $Z_1,...,Z_N$ par un engin spatial.
- Figure 2 : une représentation d'un mode préférentiel de mise en oeuvre du procédé de la figure 1 au cours duquel le procédé comporte une étape de vérification de respect d'au moins une contrainte cumulative imposée audit engin spatial.
- Figure 3 : une représentation d'un mode particulier de mise en oeuvre du procédé de la figure 1 au cours duquel le procédé comporte une étape d'agrégation de zones terrestres.
- Figure 4 : une représentation d'un mode préférentiel de mise en oeuvre du procédé de la figure 1 au cours duquel sont prises en compte les zones terrestres devant être acquises une unique fois ou bien une pluralité de fois.

## DESCRIPTION DÉTAILLÉE D'UN MODE DE RÉALISATION DE L'INVENTION

La présente invention appartient au domaine de la planification d'acquisition d'images de zones terrestres par un engin spatial en mission autour de la Terre suivant une orbite défilante prédéterminée.

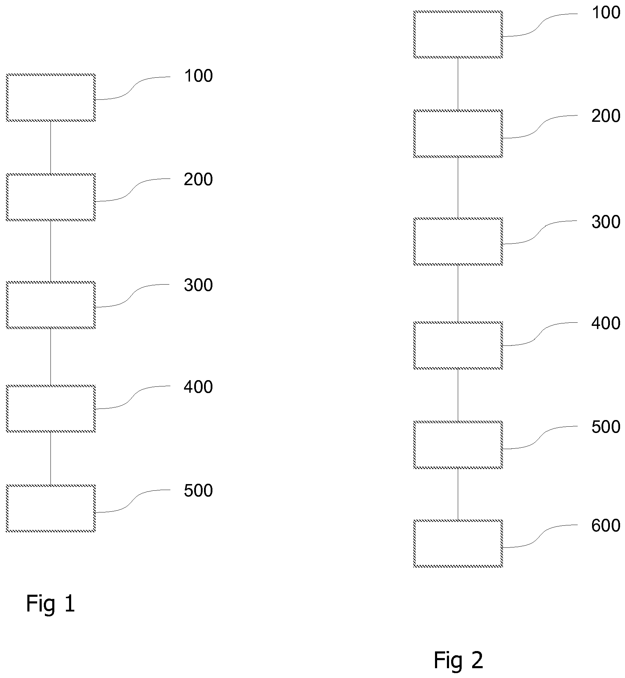

La figure 1 représente un organigramme d'un exemple de mise en oeuvre d'un procédé de planification d'acquisition d'images de zones terrestres $Z_1,...,Z_N$ par un engin spatial.

Par « acquisition d'images », on entend ici la mesure d'un rayonnement électromagnétique reçu desdites zones terrestres $Z_1,...,Z_N$. A cet effet, l'engin spatial comporte une optique destinée à réaliser une pluralité d'acquisitions d'images, ladite optique comportant en outre des capteurs adaptés à mesurer ledit rayonnement électromagnétique. Lesdites images sont finalement converties au format numérique et stockées au sein d'une mémoire de capacité limitée embarquée par ledit engin spatial.

La suite de la description vise plus spécifiquement, mais de manière non limitative, un procédé de planification d'acquisition d'images de zones terrestres par un satellite d'observation agile en orbite défilante (LEO ou MEO, acronymes des expressions anglais respectives « Low Earth Orbit » et « Medium Earth Orbit »). Par exemple, ledit satellite d'observation agile suit une orbite héliosynchrone quasi-polaire à altitude constante. Il comporte un instrument adapté à acquérir des images en mode peigne par bandes successives selon différentes directions d'acquisition.

Rien n'exclut cependant, suivant d'autres exemples non détaillés, de considérer d'autres types d'engins spatiaux (navette spatiale, sonde,...) adaptés à acquérir des images de zones terrestres, ainsi que d'autres types d'instruments ou d'autres modes d'acquisition d'image, par exemple avec des détecteurs matriciels en mode dit « step and stare ».

Les zones terrestres $Z_1,...,Z_N$ sont des surfaces au sol, d'aires respectives finies, éventuellement contigües et intersectent la fauchée dudit satellite d'observation. L'agilité du satellite autorise les zones terrestres acquises à être positionnées d'une part, le long de la projection de ladite orbite défilante sur la surface terrestre, et d'autre part de par et d'autre de cette projection sur la surface terrestre.

Dans la suite de la description, chaque zone terrestre $Z_i$ est associée à une requête $R_i$ émise par un utilisateur. Chaque requête $R_i$ pouvant être elle-même associée à différents paramètres :

- une priorité $p_i$, $p_i$ étant par exemple un entier naturel, qui caractérise la nécessité de satisfaire cette requête $R_i$ avant éventuellement d'autres requêtes. Chaque priorité $p_i$ dépend de plusieurs facteurs comme par exemple l'importance et le coût de la requête $R_i$ de laquelle elle dépend,
- des contraintes d'acquisition dépendant de plusieurs facteurs, comme par exemple l'attitude du satellite (qui détermine l'orientation de la direction de visée), ou bien encore les conditions météorologiques nécessaires à une acquisition de bonne qualité et qui doivent être satisfaites aux moments où le satellite est potentiellement en mesure d'acquérir la zone $Z_i$ associée à ladite requête $R_i$,
- un type d'acquisition (mono, stéréo, tri-stéréo). En effet, certaines zones $Z_i$ nécessitent d'être acquises une pluralité de fois, éventuellement selon un angle d'acquisition différent comme par exemple dans le cas de la stéréo ou de la tri-stéréo.

Il est à noter que d'une manière générale, c'est-à-dire au moment où une requête $R_i$ est signifiée par un utilisateur, la zone $Z_i$ associée à ladite requête $R_i$ est de forme quelconque. C'est pourquoi, et ceci dans un but d'optimisation de fonctionnement, une campagne d'acquisition d'images par le satellite est en règle générale précédée d'une étape de mise en forme consistant à découper ladite zone $Z_i$ en zones élémentaires adaptées à être acquises par ledit satellite. Par exemple, dans le cas d'une prise de vue en mode peigne, lesdites zones $Z_i$ sont découpées en bande de largeur inférieure ou égale à celle de la fauchée du satellite.

Pour la suite de la description, on considère que les zones $Z_i$ associées aux requêtes $R_i$ sont de formes respectives adaptées à être acquises par l'optique dudit satellite. Autrement dit, ladite étape de mise en forme est soit inutile eu égard aux formes initiales respectives desdites zones $Z_i$, soit considérée comme ayant été préalablement effectuée.

Par ailleurs, à chaque zone terrestre $Z_i$ correspond un intervalle temporel d'accessibilité visuelle $T_i$ le long de ladite orbite défilante. Ledit intervalle $T_i$ comporte une date de début ainsi qu'une date de fin, et correspond à une durée temporelle pendant laquelle le satellite peut acquérir une image de la zone $Z_i$ tout en respectant les contraintes d'acquisition ainsi que le type d'acquisition de la requête $R_i$ à laquelle est associée ladite zone $Z_i$.

Pour la suite de la description, on adopte aussi la convention que les composantes d'un vecteur sont lues de la gauche vers la droite en étant indexées à partir de 1. Ainsi un vecteur V à N composantes est noté $V = (V^1, V^2, ..., V^N)$. De la même manière, un élément positionné à la i-ème ligne et j-ème colonne d'une matrice M est noté $M^{i,j}$.

Le procédé de planification d'acquisitions d'images comporte plusieurs étapes successives. Dans son principe général, ledit procédé consiste à déterminer tout d'abord des séquences d'acquisition comportant des points le long de l'orbite défilante du satellite, de sorte qu'en réalisant des acquisitions d'images en les points respectifs desdites séquences, le plus grand nombre de requêtes d'utilisateurs soient satisfaites. Ensuite, ledit procédé a pour objectif de déterminer parmi lesdites séquences d'acquisition celle satisfaisant un critère d'optimalité défini ci-après ainsi que des contraintes inhérentes au fonctionnement dudit satellite.

A cet effet, le procédé comporte dans un premier temps une étape 100 de détermination, pour chaque intervalle $T_i$, d'opportunités d'acquisition discrètes $a_i^1, a_i^2, ...$ de la zone $Z_i$ de sorte qu'à chaque dite opportunité d'acquisition discrète sont associées une date de début incluse dans ledit intervalle $T_i$, une durée d'exécution, une contrainte locale cinématique ainsi qu'un poids.

Une opportunité d'acquisition discrète $a_i^j$ est un point le long de ladite orbite défilante qui désigne la possibilité pour le satellite d'acquérir une image d'une zone $Z_i$, à partir d'une date de début ainsi que pendant une durée d'exécution comprises dans l'intervalle $T_i$ de ladite zone $Z_i$, de sorte que soient respectées les contraintes d'acquisition ainsi que le type d'acquisition de la requête $R_i$ associée à cette zone $Z_i$.

Dans la suite de la description, une séquence d'acquisition désigne une suite d'opportunités d'acquisition discrètes.

Un intervalle $T_i$ comporte une ou plusieurs opportunités d'acquisition discrètes qui discrétisent ce dernier selon leurs dates de début respectives. En effet, l'agilité du satellite autorise le fait qu'une zone $Z_i$ puisse être acquise potentiellement en des temps distincts de son intervalle $T_i$.

Dans un mode particulier de mise en oeuvre de l'étape 100, les dates de début des opportunités d'acquisition discrètes de chaque intervalle $T_i$ sont échantillonnées temporellement selon un pas de temps constant. Il est à noter que plus ledit pas de temps constant est choisi petit, plus il y a d'opportunités d'acquisition au sein de chaque intervalle $T_i$, augmentant ainsi le nombre de séquences d'acquisition possibles. En contrepartie, un pas de temps petit augmente la complexité de calcul du procédé.

Dans un mode particulier de mise en oeuvre de l'étape 100, les pas de temps respectifs d'au moins deux intervalles $T_i$ et $T_j$ sont différents. Une telle configuration est avantageuse lorsque par exemple les priorités respectives des requêtes $R_i$ et $R_j$ associées auxdits intervalles $T_i$ et $T_j$ sont différentes. En effet, un moyen de satisfaire une requête de priorité élevée consiste à associer ladite requête à un grand nombre d'opportunités d'acquisition discrètes de sorte à augmenter le nombre de points le long de l'orbite en lesquels le satellite effectue des acquisitions de la zone associée à ladite requête, Autrement dit, plus la priorité d'une requête est élevée, plus il est avantageux de discrétiser finement l'intervalle d'accessibilité associé à cette dernière au moyen d'un pas de temps petit ceci afin d'avoir un nombre important d'opportunités d'acquisition discrètes au sein dudit intervalle d'accessibilité.

Dans un mode particulier de mise en oeuvre de l'étape 100, les pas de temps respectifs des intervalles $T_1,...,T_N$ sont égaux entre eux. De cette manière, un seul pas de temps est choisi, ce qui est avantageux en terme de temps de calcul lorsque les priorités respectives des requêtes $R_1,...,R_N$ associées aux intervalles $T_1,...,T_N$ sont toutes identiques.

Dans un mode particulier de mise en oeuvre de l'étape 100, le pas de temps de chaque intervalle $T_i$ est ajusté de sorte que ledit intervalle $T_i$ est associé à un nombre prédéfini d'acquisition discrètes. Par exemple, un nombre d'acquisitions discrètes égal à 20 est avantageux dans la mesure où la pratique montre qu'il s'agit d'un bon compromis entre l'optimisation du procédé du point de vue du temps de calcul et la possibilité de construire suffisamment de séquences d'acquisition en vue de satisfaire au mieux un grand nombre de requêtes.

Par ailleurs, la durée d'exécution correspond au temps nécessaire à l'optique du satellite pour réaliser l'acquisition sous l'hypothèse que l'attitude dudit satellite le permet dès ladite date de début de l'acquisition. Ainsi, la durée d'exécution d'une opportunité d'acquisition discrète ne comprend pas le temps nécessaire à la modification de l'attitude du satellite de sorte que l'optique de ce dernier soit configurée pour réaliser ladite acquisition ou bien une éventuelle autre acquisition ultérieure. A titre d'exemple nullement limitatif, et correspondant aux configurations les plus usitées, le temps d'exécution d'une opportunité d'acquisition est compris entre 5 secondes et 15 secondes.

La contrainte locale cinématique d'une opportunité d'acquisition discrète correspond à la configuration dans laquelle doit se trouver le satellite, et donc l'orientation de l'axe de visée de l'instrument, au début et à la fin d'une opportunité d'acquisition discrète afin de satisfaire la requête à laquelle est associée ladite opportunité d'acquisition discrète.

Par exemple, la contrainte locale cinématique d'une opportunité d'acquisition discrète comporte une consigne d'attitude dudit engin spatial au début et à la fin de ladite opportunité d'acquisition discrète. Par consigne d'attitude, on entend ici l'orientation du satellite lors d'une acquisition afin de satisfaire la requête associée à ladite acquisition.

Le poids $c\left[a_i^j\right]$ d'une opportunité d'acquisition discrète $a_i^j$ correspond à une mesure générale de l'intérêt d'acquérir une zone terrestre en ladite opportunité d'acquisition discrète au regard de l'ensemble des requêtes reçues par le satellite.

Par exemple, le poids de chaque opportunité d'acquisition discrète associée à une zone $Z_i$ dépend de la priorité $p_i$ de la requête $R_i$ associée à ladite zone $Z_i$, de sorte que plus ladite priorité est élevée, plus les poids respectifs desdites opportunités d'acquisition discrètes sont importants.

Le poids d'une opportunité d'acquisition discrète relève aussi avantageusement de caractéristiques de la zone terrestre à laquelle ladite opportunité est associée. Ainsi, dans un mode particulier de mise en oeuvre de l'étape 100, chaque zone $Z_i$ est associée à un critère qualité $w[Z_i]$ dépendant des caractéristiques géométriques de ladite zone $Z_i$ ainsi que des conditions météorologiques prévues au cours de l'intervalle temporel d'accessibilité visuelle $Ti$. Ledit critère qualité $w[Z_i]$ est une quantité scalaire caractérisant, par exemple, le fait que la zone $Zi$ est de taille restreinte et donc plus facile à acquérir qu'une zone de plus grande taille, mais aussi que les conditions météorologiques rencontrées pendant l'intervalle temporel d'accessibilité visuelle $T_i$ associé à $Z_i$ sont sensiblement identiques à celles exigées par les contraintes d'acquisition de la requête reliée audit intervalle $T_i$.

Dans un mode particulier de mise en oeuvre de l'étape 100, le poids de chaque opportunité d'acquisition discrète associée à une zone $Z_i$ dépend de la priorité $p_i$ de la requête $R_i$ de sorte à être un vecteur dont la seule composante non nulle est égale audit critère qualité $w[Z_i]$, la position de ladite composante non nulle dans ledit vecteur étant la priorité $p_i$ de ladite requête $R_i$. Dans ce mode de mise en oeuvre, la taille dudit vecteur est égale au nombre de priorités distinctes utilisées pour classifier les requêtes reçues par le satellite lors d'une mission. En outre, on adopte la convention qu'une priorité $p_i$ est de plus grande importance qu'une autre priorité $p_j$ si et seulement si $p_i < p_j$. Par exemple,

une opportunité d'acquisition discrète $a_i^j$ d'une zone $Z_i$ ayant un critère qualité $w[Z_i]$, et étant associée à une requête $R_i$ de priorité $p_i$ égale à 2, parmi un ensemble de requêtes dont les priorités vont de 1 à 4, a pour poids

$$c\big[a_i^j\big] \;=\; \big(c^1\big[a_i^j\big],\; c^2\big[a_i^j\big],\; c^3\big[a_i^j\big],\; c^4\big[a_i^j\big]\big) \;=\; (0,\; w[Z_i],\; 0,\; 0).$$

Une telle représentation des poids respectifs des opportunités d'acquisition discrètes est avantageuse puisqu'elle permet de comparer les poids entre eux au moyen d'une relation d'ordre naturelle notée $>$ opérant de la façon suivante : on note $c[a] > c[b]$ au sens que le poids d'une opportunité d'acquisition discrète $a$ est supérieur au poids d'une opportunité d'acquisition discrète $b$ si et seulement si

$$\{c^1[a] > c^1[b]\} \;\vee\; \{(c^1[a] = c^1[b]) \;\wedge\; (c^2[a] > c^2[b])\} \;\vee\; ...,$$

les opérateurs $\wedge$ et $\vee$ représentant respectivement les opérateurs booléens « et » et « ou », et l'opérateur $>$ étant l'opérateur classique de comparaison entre scalaires. On note que la relation d'ordre $>$ opère en comparant des vecteurs composante par composante, et est ainsi un ordre lexicographique.

Une telle représentation est aussi avantageuse car elle permet de définir de manière naturelle le poids d'une séquence d'acquisition comportant une pluralité d'opportunités d'acquisition discrètes comme la somme des poids desdites opportunités d'acquisition discrètes, la sommation vectorielle se faisant composante par composante.

Dans un mode particulier de mise en oeuvre de l'étape 100, ladite composante non nulle du poids d'une opportunité d'acquisition discrète $a_i^j$ dépend du critère qualité $w[Z_i]$ ainsi que d'un critère d'intérêt d'acquisition $w[a_i^j]$ associé à ladite opportunité d'acquisition discrète $a_i^j$. Ledit critère d'intérêt d'acquisition $w[a_i^j]$ est un scalaire qui mesure l'intérêt d'acquérir plus particulièrement l'opportunité $a_i^j$ plutôt qu'une autre opportunité associée elle aussi à la même zone $Z_i$. Par exemple, et à titre nullement limitatif, le critère d'intérêt d'acquisition dépend de l'angle d'acquisition de chaque opportunité d'une même zone $Z_i$. En outre, dans ce mode de mise en oeuvre, le poids d'une opportunité d'acquisition discrète est mis à jour de sorte qu'en reprenant l'exemple ci-avant :

$$c\big[a_i^j\big] \;=\; (0,\; w[Z_i] + w[a_i^j],\; 0,\; 0).$$

Une telle manière de procéder est avantageuse dans la mesure où le poids d'une opportunité d'acquisition discrète tient à la fois compte des caractéristiques de la zone et de la requête à laquelle est associée ladite opportunité d'acquisition discrète, mais aussi des différences entre les opportunités d'acquisition discrètes d'une même zone. Ainsi, le poids $c\big[a_i^j\big]$ mesure de façon exhaustive l'intérêt et la variabilité existant entre chaque opportunité d'acquisition discrète.

Le procédé comporte ensuite une étape 200 de regroupement des opportunités d'acquisition discrètes des différentes zones $Z_i$ dans un ensemble D.

Chaque élément de l'ensemble D est une opportunité d'acquisition discrète à laquelle est associée une date de début, une durée d'exécution, une contrainte locale cinématique ainsi qu'un poids. L'ensemble D, tel que décrit dans cette étape 200, regroupe ainsi toutes les opportunités susceptibles de faire partie d'une ou plusieurs séquences d'acquisition en vue de satisfaire un maximum de requêtes.

Le procédé comporte ensuite une étape 300 de classement des opportunités d'acquisition discrètes de l'ensemble D par date de début croissante.

Ladite étape 300 consiste donc à ordonner les éléments de l'ensemble D. Il est possible de classer les éléments de D selon d'autres caractéristiques des opportunités d'acquisition discrètes. Par exemple, ces dernières peuvent être classées par poids croissants (au sens de la relation d'ordre $>$), par durées d'exécution croissantes ou bien encore selon les requêtes auxquelles elles sont associées. Toutefois, dans le présent mode de mise en oeuvre, le choix s'est avantageusement porté sur un classement par date de début croissante pour des raisons exposées ci-après.

Il est à noter que tout sous ensemble de l'ensemble D ainsi trié constitue une séquence d'acquisition potentielle, c'est-à-dire une suite d'opportunités d'acquisition discrètes respectant la chronologie du mouvement du satellite le long de son orbite défilante. Il convient néanmoins de s'assurer que le satellite puisse effectivement réaliser les unes après les autres les opportunités d'acquisitions discrètes de ladite séquence d'acquisition potentielle.

A cet effet, le procédé comporte ensuite une étape 400 d'évaluation de compatibilité cinématique entre lesdites opportunités d'acquisition discrètes de l'ensemble D, prises deux à deux selon leurs classements respectifs.

Par compatibilité cinématique, on entend ici que deux opportunités d'acquisition discrètes $D^i$ et $D^j$ de l'ensemble D, telles que ladite opportunité $D^i$ ait une date de début antérieure à la date de début de ladite opportunité $D^j$ (donc telles que i < j), sont chaînables par le satellite le long de son orbite. Cela est théoriquement possible lorsque le temps de manoeuvre nécessaire au satellite afin de se rendre de l'opportunité $D^i$ à l'opportunité $D^j$ est inférieur à la durée séparant la date de fin de l'opportunité $D^i$ de la date de début de l'opportunité $D^j$.

Par extension, une séquence d'acquisition A qui est un sous ensemble de l'ensemble D est dite compatible cinématiquement lorsque ses éléments sont deux à deux compatibles cinématiquement, c'est-à-dire lorsque $A^j$ est compatible cinématiquement avec $A^{i+1}$.

Classiquement, les éléments de l'ensemble D peuvent être vus comme les sommets d'un graphe G, ces sommets étant reliés entre eux au moyen d'arrêtes lorsqu'ils sont compatibles cinématiquement entre eux. La structure de l'ensemble D, obtenue à l'issue de l'étape 300, conditionne avantageusement la structure du graphe G dans la mesure où :

- le classement des éléments de D par date de début croissante fournit une orientation naturelle aux arêtes du graphe de G dans le sens des temps croissants : le graphe G est donc orienté,
- une opportunité D' n'est pas compatible cinématiquement avec une opportunité d'acquisition discrète $D^j$ dont la date de début est antérieure à celle de ladite opportunité $D^i$ (donc telles que i > j). Cela revient à dire que les éléments de toute séquence d'acquisition compatible cinématiquement sont deux à deux distincts. Cela garantit l'impossibilité du satellite à passer deux fois au même endroit le long de son orbite : le graphe G est donc aussi acyclique.

Dès lors, on comprend que chercher à planifier l'acquisition d'images de zones terrestres revient à chercher des séquences d'acquisition compatibles cinématiquement au sein dudit graphe G. Plus particulièrement, dans l'objectif de satisfaire le plus grand nombre de requêtes possible, cela revient à chercher une séquence d'acquisition compatible cinématiquement et ayant le poids le plus élevé au sein du graphe G. Il s'agit là d'un problème d'optimisation, encore connu sous l'expression de « problème de recherche du plus long chemin » (« longest path problem » en anglais).

Le fait que le graphe G soit un graphe orienté acyclique est avantageux dans la mesure où il est connu que dans ce cas ledit problème d'optimisation est de complexité polynomiale en nombre de sommets du graphe G, alors qu'il est de complexité exponentielle pour un graphe quelconque.

Dans le présent mode de mise en oeuvre, le graphe G est représenté au moyen d'une matrice carrée M de booléens, dite matrice d'adjacence, dont le terme situé à la ligne i et à la colonne j est :

- $M^{i,j} = 1$ si $D^i$ et $D^j$ sont compatibles cinématiquement,
- $M^{i,j} = 0$ sinon.

Les conditions de compatibilité entre deux opportunités d'acquisition discrètes impliquent que M est une matrice triangulaire supérieure stricte.

Il est à noter que la mise en oeuvre des étapes 100 à 400 est de préférence effectuée au sol, et en amont de la mission d'observation du satellite, c'est-à-dire éventuellement longtemps avant la résolution du problème d'optimisation. Une telle mise en oeuvre est avantageuse dans la mesure où les tâches effectuées pendant les étapes 100 à 400, et plus particulièrement celle de détermination des opportunités d'acquisition discrètes de l'étape 100 ainsi que celle de détermination du graphe G au cours de l'étape 400, sont facilement exécutables par des moyens informatiques selon un schéma de programmation parallèle, permettant ainsi un gain de temps. En outre, une première mise en oeuvre des étapes 100 à 400 permet avantageusement de s'affranchir d'une nouvelle détermination complète du graphe G lorsqu'on souhaite par exemple inclure à la volée dans le plan de mission du satellite une requête supplémentaire, le graphe G étant en effet rapidement et facilement mis à jour. De la même manière, la mise à jour de priorités et/ou de critères qualité de zones terrestres et/ou de poids d'opportunités d'acquisition discrètes peut être effectuée au dernier moment avant la résolution du problème d'optimisation.

Dans une étape 500, consécutive à l'étape 400, on détermine une séquence optimale d'opportunités d'acquisition discrètes ayant un poids maximal, et compatible cinématiquement.

Ladite séquence optimale est cherchée au sein du graphe G en parcourant la partie située au-dessus de la diagonale de la matrice M selon une méthode de calcul de plus long chemin, et fournit un plan d'acquisition théorique suivi par le satellite au cours de sa mission d'observation.

Pour ce faire, on procède en deux temps. Dans un premier temps, on détermine pour chaque opportunité d'acquisition discrète $D^i$ de l'ensemble D un poids objectif $obj(D^i)$, qui est le poids maximal des séquences compatibles cinématiquement et menant à ladite opportunité d'acquisition discrète $D^i$. Pour cela, on introduit un ensemble $P(D^i)$ de toutes les opportunités d'acquisition discrètes précédant $D^i$ dans l'ensemble D, et compatibles cinématiquement avec $D^i$. Alors le poids objectif $obj(D^i)$ est égal au poids de $D^i$ auquel s'ajoute le maximum des poids objectifs des opportunités d'acquisition discrètes de $P(D^i)$, c'est-à-dire

$$obj(\mathrm{D}^i) = c[\mathrm{D}^i] + \max_{s \in P(\mathrm{D}^i)}(obj(s)).$$

En faisant désormais l'hypothèse que l'ensemble D est de cardinal $\Omega(D)$, et en introduisant une variable *previous*$(D^i)$ qui stocke l'opportunité d'acquisition discrète de l'ensemble $P(D^i)$ maximisant le poids de la séquence optimale menant à $D^i$, la détermination du poids objectif de tous les éléments de l'ensemble D se fait dynamiquement au moyen d'un premier algorithme s'écrivant :

**Pour** *i allant de 1 à* $\Omega(D)$ *: obj($D^i$) = c[$D^i$]* **Fin de Pour** *;*

**Pour** *i allant de 1 à* $\Omega(D)$ *: previous($D^i$) = -1* **Fin de Pour** *;*

**Pour** *i allant de 1 à* $\Omega(D)$ *:*

    **Pour** *j allant de (i+1) à* $\Omega(D)$ *:*

      **Si** *$M^{i,j}$ = 1 :*

        **Si** *obj($D^i$) + c[$D^j$] > obj($D^j$) :*

          *previous($D^j$) = $D^i$ ;*

          *obj($D^j$) = obj($D^i$) + c[$D^j$] ;*

        **Fin de Si** *;*

      **Fin de Si** *;*

    **Fin de Pour** *;*

**Fin de Pour** *;*

Il est à noter que la recherche de la séquence optimale par la méthode de calcul du plus long chemin, telle que présentée dans le premier algorithme, est avantageusement adaptée au fait que les opportunités d'acquisition discrètes de D sont classées par dates de début croissantes au cours de l'étape 300. En effet, un tel classement correspond à un ordre topologique sur le graphe G qui facilite la mise en place des étapes séquentielles dudit premier algorithme.

Dans un deuxième temps, ladite séquence optimale est déterminée en sélectionnant parmi les opportunités d'acquisition discrètes de D, celle de poids objectif maximal, puis en remontant itérativement les prédécesseurs de ladite opportunité de poids objectif maximal au moyen des informations stockées dans la variable *previous.*

Comme noté ci-dessus, le classement des opportunités d'acquisition discrètes de D fournit avantageusement un ordre topologique sur le graphe G, qui dès lors est orienté acyclique, et par conséquent toute séquence cinématiquement compatible obtenue en sortie de l'étape 500 est optimale au sens de la maximalité du poids.

Dans un mode particulier de mise en oeuvre du procédé, l'étape 500 comporte pour chaque opportunité d'acquisition discrète $D^i$ de l'ensemble D une sélection partielle d'opportunités d'acquisition discrètes précédant $D^i$ dans l'ensemble D, et compatibles cinématiquement avec $D^i$, parmi toutes les opportunités d'acquisition discrètes précédant $D^i$ dans l'ensemble D, et compatibles cinématiquement avec $D^i$.

Une telle manière de procéder revient à restreindre l'ensemble $P(D^i)$ pour chaque opportunité d'acquisition discrète $D^i$ de l'ensemble D. Ainsi, ledit ensemble $P(D^i)$ peut être avantageusement remplacé par un ensemble $P_c(D^i)$ défini comme un sous-ensemble de ce dernier, et comportant les opportunités d'acquisition discrètes précédant $D^i$ dans l'ensemble D, compatibles cinématiquement avec $D^i$ ainsi que proches de $D^i$. Par proches de $D^i$, on entend ici que les éléments de $P_c(D^i)$ occupent respectivement une position dans D de sorte que la différence entre cette position et celle de $D^i$ reste bornée par une constante prédéfinie.

Dès lors, le poids objectif obj(D') s'obtient par la formule

$$obj(\mathrm{D}^i) = c[\mathrm{D}^i] + \max_{s \in P_c(\mathrm{D}^i)}(obj(s)).$$

A cet effet, on introduit une variable maxNextVertice($D^i$) qui contient pour chaque opportunité d'acquisition $D^i$

le nombre maximum de sommets du graphe G visités au cours de la recherche de la séquence optimale. Le scalaire maxNextVertice($D^i$) constitue ainsi un majorant du cardinal de l'ensemble $P_c(D^i)$. Dès lors, le premier algorithme devient :

**Pour** i allant de 1 à Ω(D) : obj($D^j$) = c[$D^j$] **Fin de Pour** ;

**Pour** i allant de 1 à Ω(D) : previous($D^i$) = -1 **Fin de Pour** ;

**Pour** i allant de 1 à Ω(D) :

    **Pour** j allant de (i+1) à maxNextVertice($D^j$) :

        **Si** $M^{i,j}$ = 1 :

            **Si** obj($D^i$) + c[$D^j$] > obj($D^j$) :

                previous($D^j$) = $D^i$ ;

                obj($D^j$) = obj($D^i$) + c[$D^j$] ;

            **Fin de Si** ;

        **Fin de Si** ;

    **Fin de Pour** ;

**Fin de Pour** ;

Limiter l'ensemble P($D^i$) à l'ensemble $P_c(D^i)$ est avantageux car l'exploration des sommets de G par la méthode de calcul de plus long chemin est réduite en temps de calcul. Par exemple, et à titre nullement limitatif, lorsque l'ensemble $P_c(D^i)$ contient uniquement des opportunités d'acquisition discrètes séparées de soixante secondes au plus de $D^i$ le long de l'orbite défilante, le temps de calcul est réduit de 60% à 70% et la séquence optimale reste inchangée par rapport au cas où $P_c(D^i)$ n'est pas utilisé.

La figure 2 représente un mode préférentiel de mise en oeuvre du procédé de la figure 1 au cours duquel le procédé comporte, à la suite de l'étape 500, une étape 600 de vérification de respect d'au moins une contrainte cumulative imposée audit satellite.

Une contrainte cumulative imposée au satellite est une contrainte qui prend en compte l'ensemble des choix faits dans la planification de la mission d'observation avant que le satellite n'atteigne sur son orbite une opportunité d'acquisition discrète. Autrement dit, et en opposition aux contraintes locales cinématiques associées à chacune des opportunités d'acquisition discrètes, une contrainte cumulative a un caractère global relativement à l'historique de mission du satellite.

Par exemple, et à titre nullement limitatif, ladite au moins une contrainte cumulative comporte une contrainte de taille mémoire. En effet, en mission d'observation, le satellite stocke sous format numérique les acquisitions qu'il réalise dans une mémoire de type connu en soi et de taille limitée.

Alternativement ou en complément de l'étape 600, ladite au moins une contrainte cumulative comporte une contrainte de puissance électrique consommée. En effet, en mission d'observation, le satellite consomme pour se déplacer de l'énergie électrique stockée dans des batteries de capacités respectives limitées. Il en est de même pour le fonctionnement de l'optique du satellite. Il est à noter que lesdites batteries sont rechargeables au moyen généralement de panneaux solaires.

Alternativement ou en complément de l'étape 600, ladite au moins une contrainte cumulative comporte une contrainte de temps maximum de fonctionnement d'instruments embarqués dans ledit engin.

Rien n'exclut, suivant d'autres exemples non détaillés ici, d'avoir d'autres contraintes cumulatives appliquées au satellite.

La vérification de ladite au moins une contrainte cumulative consiste à valider que la séquence optimale d'acquisition obtenue en sortie de l'étape 500 est compatible avec le fonctionnement général du satellite. A cet effet, cette vérification est mise en oeuvre au cours de l'étape 600 au moyen, par exemple, d'un processus itératif consistant à supprimer une à une de ladite séquence optimale les opportunités d'acquisition discrètes par ordre de priorité croissant tant que ladite au moins une contrainte cumulative n'est pas satisfaite. De cette manière, le procédé produit en sortie de l'étape 600 une séquence qui est une sous séquence de la séquence optimale obtenue en sortie de l'étape 500, et qui est compatible avec les contraintes cumulatives associées au satellite. Cette séquence obtenue en sortie de l'étape 600 est le plan d'acquisition effectivement suivi par le satellite au cours de sa mission.

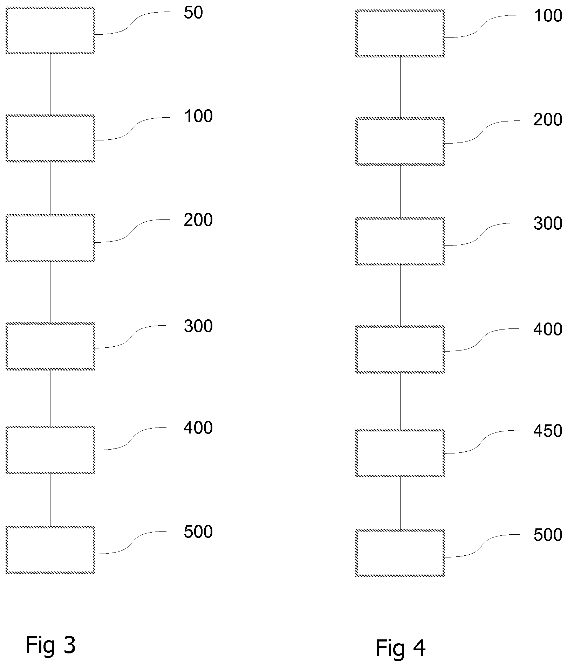

La figure 3 représente un mode particulier de mise en oeuvre du procédé de la figure 1 au cours duquel le procédé peut comporter une étape 50 d'agrégation de zones terrestres, antérieure à l'étape 100 de détermination d'opportunités d'acquisition discrètes.

Par agrégation de zones terrestres, on entend ici le fait de regrouper certaines zones terrestres $Z_1,...,Z_N$, au sein d'une ou plusieurs zones dites englobantes, lesdites zones regroupées devant être proches géographiquement les unes des autres, de sorte à maximiser le nombre de zones acquises au cours d'une même opportunité d'acquisition discrète.

Par exemple, une zone engloblante peut contenir plusieurs zones terrestres alignées dans la direction d'acquisition du satellite le long de son orbite.

Dans un autre exemple, éventuellement couplé au précédent, une zone englobante peut contenir plusieurs zones terrestres alignées dans une direction transverse à l'orbite du satellite. Dans ce cas, la taille de ladite zone englobante est bornée par la taille de la fauchée du satellite.

Dans la mise en oeuvre de l'étape 50, chaque zone englobante est par exemple associée à une priorité égale à la priorité de plus haute importance parmi les priorités de toutes les zones regroupées au sein de ladite zone englobante. De plus, le critère qualité d'une zone englobante est par exemple égal à la somme des critères qualité respectifs des zones regroupées au sein de ladite zone englobante.

A l'issue de l'étape 50, chaque zone englobante est vue comme une zone terrestre à part entière de sorte que les étapes 100 à 600 ne sont pas modifiées.

Il est à noter que le regroupement de zones terrestres au sein de zones englobantes se révèle pertinent lorsque plusieurs zones terrestres sont contiguës, de sorte à pouvoir être toutes acquises en une seule fois. Une telle manière de procéder est avantageuse car elle permet au satellite d'économiser le temps de manoeuvre nécessaire autrement pour se déplacer entre les opportunités d'acquisition discrètes associées respectivement à chacune desdites zones terrestres regroupées. Cette économie de temps peut avantageusement être utilisée pour acquérir davantage de zones terrestres qui ne peuvent quant à elles pas être regroupées au sein de zones englobantes.

La figure 4 représente un mode préférentiel de mise en oeuvre du procédé de la figure 1 au cours duquel l'étape 500 de détermination d'une séquence optimale comporte avantageusement la mise à jour dynamique d'une variable *pathMesh* stockant les zones $Z_i$ associées aux opportunités d'acquisition discrètes de ladite séquence optimale, de sorte à empêcher la duplication d'opportunités d'acquisition discrètes de zones devant être acquises une seule fois.

A cet effet, en notant mesh($D^i$) la fonction qui renvoie la zone terrestre à laquelle est associée l'opportunité d'acquisition discrète $D^i$, le premier algorithme se réécrit de la façon suivante :

*Pour i allant de 1 à* Ω(D) *: obj($D^i$) = c[$D^i$] Fin de Pour ;*

*Pour i allant de 1 à* Ω(D) *: previous($D^i$) = -1 Fin de Pour ;*

*Pour i allant de 1 à* Ω(D) *:*

    *Pour j = (i+1)…maxNextVertice($D^i$) :*

        *Si $M^{i,j}$ = 1 :*

            *Si obj($D^i$) + c[$D^j$] > obj($D^j$) :*

                *Si mesh($D^j$) ∉ pathMesh($D^i$) ;*

                    *previous($D^j$) = $D^i$ ;*

                    *obj($D^j$) = obj($D^i$) + c[$D^j$] ;*

                    *pathMesh($D^j$) = {pathMesh($D^i$) mesh($D^j$)} ;*

                *Fin de Si ;*

            *Fin de Si ;*

        *Fin de Si ;*

    *Fin de Pour ;*

*Fin de Pour ;*

En stockant dans la variable pathMesh l'historique des zones terrestres visitées lors de la détermination de la séquence optimale, le procédé est avantageusement adapté à empêcher qu'une zone terrestre $Z_i$ ayant un critère qualité élevé, associée à une requête de haute priorité ainsi que devant être acquise une unique fois, soit finalement acquise une pluralité de fois. En effet, dans l'hypothèse où une telle zone $Z_i$ est associée à plusieurs opportunités d'acquisition discrètes compatibles cinématiquement entre elles, la méthode de calcul de plus long chemin cherchant à maximiser le poids de la séquence optimale, il est tout à fait possible que plusieurs desdites opportunités d'acquisition discrètes associées à $Z_i$ soient inclues dans ladite séquence optimale. Il est donc avantageux d'introduire la variable *pathMesh* tel qu'explicité ci-dessus afin de discriminer ce type de configurations.

Les caractéristiques détaillées précédemment permettent d'obtenir une séquence optimale garantissant une prise de vue unique pour chaque zone terrestre associée à une requête monovue. Reste alors à considérer également le cas de zones terrestres associées à des requêtes stéréo/tri-stéréo.

C'est pourquoi, dans ledit mode préférentiel de mise en oeuvre illustré par la figure 4, le procédé comporte aussi une étape 450 de prise en compte de requêtes d'acquisitions multiples, consécutive à l'étape 400 d'évaluation de compatibilité cinématique et antérieure à l'étape 500 de détermination d'une séquence optimale, dans laquelle les poids respectifs des opportunités d'acquisition discrètes associées à des zones $Z_i$ devant être acquises une pluralité de fois sont mis à jour et dans laquelle une variable *mustHit* force l'enchaînement desdites opportunités d'acquisition discrètes afin de satisfaire lesdites requêtes d'acquisitions multiples.

Il est à noter que les opportunités d'acquisition discrètes associées à une zone $Z_i$ devant être acquise une pluralité de fois appartiennent au même intervalle temporel d'accessibilité visuelle $T_i$ et sont en outre distinctes les unes des autres. Lesdites opportunités ont donc des dates de début différentes et permettent ainsi par exemple d'acquérir ladite zone $Z_i$ sous un angle différent.

Le principe général de l'étape 450 consiste à augmenter artificiellement du double ou du triple le poids des opportunités d'acquisition discrètes associées à des zones $Z_i$ devant être acquises respectivement en mode stéréo ou tri-stéréo. On comprend par ailleurs que l'agilité du satellite permet d'envisager de satisfaire des requêtes monovues entre des opportunités d'acquisition associées à des zones $Z_i$ devant être acquises plusieurs fois.

Pour cela, on détermine dans un premier temps, pour chaque requête correspondant à une demande d'acquisitions multiples, l'ensemble des séquences d'acquisition compatibles cinématiquement, comprenant exactement le nombre d'acquisitions requis de sorte à satisfaire ladite requête (ce nombre est de 2 et 3 respectivement dans les cas stéréo et tri-stéréo), ainsi qu'éventuellement des opportunités d'acquisition discrètes associées à d'autres requêtes monovues tel qu'évoqué ci-dessus. Une telle séquence est dite séquence multi-acquisition et est construite de sorte que ses premier et dernier éléments sont des opportunités d'acquisition discrètes appartenant à une même zone terrestre et associées à la requête dont dépend ladite séquence multi-acquisition. Autrement dit, lesdits premier et dernier éléments ne sont pas associés à des requêtes monovues.

Dans un deuxième temps, pour chaque séquence multi-acquisition telle que déterminée ci-dessus :

- on détermine un critère de chaînage. Ledit critère de chaînage est un scalaire qui correspond à une mesure de l'intérêt de satisfaire la requête à laquelle est associée ladite séquence multi-acquisition selon effectivement ladite séquence multi-acquisition plutôt qu'une autre. Le critère de chaînage est donc une échelle de comparaison des séquences multi-acquisition associées à une même requête,

- on détermine un poids de chaînage. Dans un mode particulier de mise en oeuvre, ledit poids de chaînage dépend de la priorité de la requête, du critère qualité $w[Z_i]$ de la zone $Z_i$ associée à ladite requête ainsi que dudit critère de chaînage. Par exemple, la prise en compte dudit critère de chaînage dans le poids de chaînage se fait en additionnant ledit critère de chaînage au critère qualité $w[Z_i]$ de manière identique à ce qui est décrit au cours de l'étape 100 concernant l'utilisation du critère d'intérêt d'acquisition $w[a_i^j]$. Dès lors, le poids de chaînage de la séquence multi-acquisition est un vecteur dont une seule composante est non nulle,

- le graphe G est mis à jour selon un graphe $G_{multi}$. D'une part, le graphe $G_{multi}$ comporte des sommets correspondant respectivement aux opportunités d'acquisition discrètes associées à des requêtes monovues et ayant respectivement un poids tel que déterminé dans l'étape 100. D'autre part, le graphe $G_{multi}$ comporte des sommets correspondant respectivement à chaque opportunité d'acquisition discrète de ladite séquence multi-acquisition et ayant tous un poids nul, sauf le sommet associé à la première composante de ladite séquence et dont le poids est égal au poids de chaînage,

- on crée une variable *mustHit* qui à chaque opportunité d'acquisition discrète de ladite séquence multi-acquisition associe l'opportunité d'acquisition discrète qui lui succède dans le temps au sein de ladite séquence multi-acquisition. Par exemple, à titre nullement limitatif, si ladite séquence multi-acquisition est associée à une requête tri-stéréo d'une zone $Z_i$ et s'écrit $(a_i^1, a_i^2, a_i^3)$, alors on a $mustHit(a_i^1) = a_i^2$ et $mustHit(a_i^2) = a_i^3$. Dans un autre exemple, et à titre nullement limitatif, si ladite séquence multi-acquisition est associée à une requête tri-stéréo d'une zone $Z_i$ et s'écrit $(a_i^1, a_i^2, a_j^1, a_i^3)$, où $a_j^1$ est une opportunité associée à une requête monovue d'une zone $Z_j$ différente de $Z_i$, alors on a $mustHit(a_i^1) = a_i^2$, $mustHit(a_i^2) = a_j^1$ et $mustHit(a_j^1) = a_i^3$.

Il est à noter que dans le cas où une requête correspondant à une demande d'acquisitions multiples est associée à plusieurs séquences multi-acquisition possibles, le graphe $G_{multi}$ comporte des sommets correspondant à des opportunités d'acquisition discrètes identiques en termes de date de début, mais néanmoins différentes les unes des autres en termes de poids. Par exemple, et à titre nullement limitatif, supposons qu'une requête stéréo soit associée à un intervalle d'accessibilité discrétisé selon quatre opportunités d'acquisition discrètes $(a_i^1, a_i^2, a_i^3, a_i^4)$ de sorte que seules les séquences multi-acquisition $(a_i^1, a_i^3)$ et $(a_i^1, a_i^4)$ sont cinématiquement compatibles et adaptées à satisfaire ladite requête. Alors le sommet $a_i^1$ va apparaître deux fois dans le graphe $G_{multi}$, à savoir une première fois avec un poids égal au poids de chaînage de la séquence $(a_i^1, a_i^3)$ et de sorte que $mustHit(a_i^1) = a_i^3$, ainsi qu'une deuxième fois avec un poids égal au poids de chaînage de la séquence $(a_i^1, a_i^4)$ et de sorte que $mustHit(a_i^1) = a_i^4$. Les sommets $a_i^2, a_i^3$ et $a_i^4$ n'apparaissent quant à eux qu'une seule fois dans le graphe $G_{multi}$ et ont un poids nul.

Le graphe $G_{multi}$ est représenté au moyen d'une matrice $M_{multi}$ selon un mode de mise en oeuvre identique à celui utilisé pour représenter le graphe G au moyen de la matrice M dans l'étape 400. On comprend donc, du fait que certaines opportunités d'acquisition discrètes puissent apparaître plusieurs fois dans le graphe $G_{multi}$ tel que décrit ci-avant, que ladite matrice $M_{multi}$ a une taille supérieure à la matrice M. En outre le graphe $G_{multi}$ est celui utilisé lors de l'étape 500 de recherche d'une séquence optimale lorsque l'ensemble des requêtes transmises au satellite comporte au moins une requête d'acquisitions multiples.

Par ailleurs, la variable *mustHit* est aussi adaptée à forcer l'exécution d'une séquence multi-acquisition une fois que le premier élément de cette dernière est effectivement intégré à la séquence optimale au cours de l'étape 500. Une telle façon de procéder est avantageuse car elle permet au procédé de prendre en compte dans leur entièreté les requêtes associées à des demandes d'acquisitions multiples sans pour autant privilégier ces dernières au détriment de requêtes monovues comportant des opportunités d'acquisition discrètes de poids respectifs supérieurs des opportunités que comprennent lesdites requêtes d'acquisitions multiples.

La variable *mustHit* est aussi avantageusement utilisée au cours du calcul du plus long chemin de l'étape 500 afin de vérifier que lorsqu'une opportunité d'acquisition discrète est ajoutée à la séquence optimale en construction, cette opportunité d'acquisition discrète est bien stockée dans la variable *mustHit* appliquée aux éléments de la séquence optimale précédant ladite opportunité ajoutée.

Dans le cas d'une constellation de satellites, il est avantageux de pouvoir répondre rapidement à un client si une requête peut-être réalisée et sous quel délai. Dans ce cas le procédé peut être :

a) réception de la requête du client,
b) identification du prochain satellite qui peut faire cette acquisition, sans prendre en compte le plan d'acquisition en cours de ce satellite
c) génération d'un nouveau plan pour ledit satellite avec les contraintes suivantes :

c1. toutes les acquisitions programmées dans le plan courant doivent le rester (sauf si l'on accepte d'annuler des acquisitions prévues), par contre leur conditions d'acquisition peuvent changer.
c2. insertion de la nouvelle requête

d) en fonction du résultat de l'optimisation :

d1. si l'acquisition est incluse dans le nouveau plan alors le plan modifié est transmis au satellite
d2. sinon on réitère sur le satellite suivant

Il n'est pas nécessaire de prendre les nouvelles demandes client une par une, cela peut se faire de façon périodique, par exemple toutes les 5 minutes. Moyennant un choix adapté des priorités, il est possible de forcer la prise en compte de la nouvelle requête.

De part sa rapidité le calcul du plan peut être fait fréquemment. En outre, la mise à jour de la solution est moins chère qu'un calcul complet en partant des résultats du calcul précédent, et notamment la matrice M représentant le graphe obtenu à la fin de l'étape 400 ou le graphe $G_{mult}$ associé à la matrice $M_{multi}$ à la fin de l'étape 450

Ainsi il est possible de minimiser le temps de calcul pour les étapes antérieures à l'étape 500, qui sont les plus gourmandes en temps de calcul.

## Revendications

1. Procédé de planification d'acquisition d'images de zones terrestres $Z_1,...,Z_N$, par un engin spatial en mission autour de la Terre suivant une orbite défilante prédéterminée, comme par exemple un satellite d'observation,
   chaque zone terrestre $Z_i$ étant associée à une requête $R_i$ de priorité $p_i$ de sorte qu'à ladite zone $Z_i$ correspond un intervalle temporel d'accessibilité visuelle $T_i$ le long de ladite orbite défilante,
   **caractérisé en ce qu'**il comporte les étapes successives suivantes :

   - une étape (100) de détermination pour chaque intervalle $T_i$ d'opportunités d'acquisition discrètes de la zone $Z_i$ de sorte qu'à chaque dite opportunité d'acquisition discrète sont associées une date de début incluse dans ledit intervalle $T_i$, une durée d'exécution, une contrainte locale cinématique ainsi qu'un poids,
   - une étape (200) de regroupement des opportunités d'acquisition discrètes des zones $Z_i$ dans un ensemble D,
   - une étape (300) de classement des opportunités d'acquisition discrètes de l'ensemble D, les opportunités d'acquisition étant classées par date de début croissante et désignées par $D^i$,
   - une étape (400) d'évaluation de compatibilité cinématique entre lesdites opportunités d'acquisition discrètes de l'ensemble D, prises deux à deux selon leurs classements respectifs,
   - une étape (500) de détermination d'une séquence optimale d'opportunités d'acquisition discrètes ayant un poids maximal, et compatible cinématiquement.

2. Procédé selon la revendication 1, comportant une étape (450) de prise en compte de requêtes d'acquisitions multiples, consécutive à l'étape (400) d'évaluation de compatibilité cinématique et antérieure à l'étape (500) de détermination d'une séquence optimale, dans laquelle les poids respectifs des opportunités d'acquisition discrètes associées à des zones $Z_i$ devant être acquises une pluralité de fois sont mis à jour et dans laquelle une variable *mustHit* force l'enchaînement desdites opportunités d'acquisition discrètes afin de satisfaire lesdites requêtes d'acquisitions multiples.

3. Procédé selon l'une des revendications 1 à 2, dans lequel l'étape (500) de détermination d'une séquence optimale comporte la mise à jour dynamique d'une variable pathMesh stockant les zones $Z_i$ associées aux opportunités d'acquisition discrètes de ladite séquence optimale, de sorte à empêcher la duplication d'opportunités d'acquisition discrètes de zones devant être acquises une seule fois.

4. Procédé selon l'une des revendications 1 à 3, dans lequel l'étape (500) comporte pour chaque opportunité d'acquisition discrète $D^i$ de l'ensemble D une sélection partielle d'opportunités d'acquisition discrètes précédant $D^i$ dans D, et compatibles cinématiquement avec $D^i$, parmi toutes les opportunités d'acquisition discrètes précédant $D^i$ dans D, et compatibles cinématiquement avec $D^i$.

5. Procédé selon l'une des revendications 1 à 4, comportant une étape (600) de vérification de respect d'au moins une contrainte cumulative imposée audit engin spatial, ladite étape (600) de vérification étant consécutive à l'étape (500) de détermination d'une séquence optimale.

6. Procédé selon la revendication 5, dans lequel ladite au moins une contrainte cumulative comporte une contrainte de taille mémoire.

7. Procédé selon l'une des revendications 5 à 6, dans lequel ladite au moins une contrainte cumulative comporte une contrainte de puissance électrique consommée.

8. Procédé selon l'une des revendications 5 à 7, dans lequel ladite au moins une contrainte cumulative comporte une contrainte de temps maximum de fonctionnement d'instruments embarqués dans ledit engin.

9. Procédé selon l'une des revendications 5 à 8, dans lequel l'étape (600) de vérification de respect de contraintes cumulatives comporte une mise à jour dynamique de ladite séquence optimale par suppression d'opportunités d'acquisition discrètes, tant que lesdites contraintes cumulatives ne sont pas satisfaites.

10. Procédé selon l'une des revendications 1 à 9, dans lequel les dates de début des opportunités d'acquisition discrètes de chaque intervalle $T_i$ sont échantillonnées temporellement selon un pas de temps constant.

11. Procédé selon la revendication 10, dans lequel les pas de temps respectifs des intervalles $T_1,...,T_N$ sont égaux entre eux.

12. Procédé selon la revendication 10, dans lequel les pas de temps respectifs d'au moins deux intervalles $T_i$ et $T_j$ sont différents.

13. Procédé selon la revendication 10, dans lequel le pas de temps de chaque intervalle $T_i$ est ajusté de sorte que ledit intervalle $T_i$ est associé à 20 opportunités d'acquisition discrètes.

14. Procédé selon l'une des revendications 1 à 13, dans lequel la contrainte locale cinématique d'une opportunité d'acquisition discrète comporte une consigne d'attitude dudit engin spatial au début et à la fin de ladite opportunité d'acquisition discrète.

15. Procédé selon l'une des revendications 1 à 14, dans lequel le poids de chaque opportunité d'acquisition discrète associée à une zone $Z_i$ dépend de la priorité $p_i$ de la requête $R_i$ associée à ladite zone $Z_i$.

16. Procédé selon l'une des revendications 1 à 15, dans lequel chaque zone $Z_i$ est associée à un critère qualité $w_i$ dépendant des caractéristiques géométriques de ladite zone $Z_i$ ainsi que des conditions météorologiques prévues au cours de l'intervalle temporel d'accessibilité visuelle Ti.

17. Procédé selon la revendication 16, dans lequel le poids de chaque opportunité d'acquisition discrète associée à une zone $Z_i$ dépend de la priorité $p_i$ de la requête $R_i$ de sorte à être un vecteur dont la seule composante non nulle est égale au critère qualité $w_i$, la position de ladite composante non nulle dans ledit vecteur dépendant de la priorité de ladite requête $R_i$.

18. Procédé selon la revendication 17, dans lequel ladite composante non nulle dépend du critère qualité $w_i$ et d'un critère d'intérêt d'acquisition associé à ladite opportunité d'acquisition discrète.

19. Procédé selon l'une des revendications 17 à 18, dans lequel l'étape (500) de détermination d'une séquence optimale comporte une comparaison des poids respectifs des opportunités d'acquisition discrètes compatibles cinématiquement entre elles.

20. Procédé selon l'une des revendications 1 à 19, comportant une étape (50) d'agrégation de zones terrestres, antérieure à l'étape (100) de détermination d'opportunités d'acquisition discrètes.

21. Procédé selon l'une des revendications 1 à 20, dans lequel ledit engin spatial est un satellite d'observation fonctionnant en mode peigne.

## Patentansprüche

1. Verfahren zur Planung der Erfassung von Bildern von Gebieten der Erde $Z_1, ..., Z_N$ durch ein Raumfahrzeug auf Mission um die Erde gemäß einer vorbestimmten laufenden Umlaufbahn, wie beispielsweise einen Beobachtungssatelliten,
   wobei jedes Gebiet der Erde $Z_i$ einer Anfrage $R_i$ mit Priorität $p_i$ derart zugeordnet ist, dass das Gebiet $Z_i$ einem Zeitintervall visueller Zugänglichkeit $T_i$ entlang der laufenden Umlaufbahn entspricht,
   **dadurch gekennzeichnet, dass** es die folgenden aufeinanderfolgenden Schritte aufweist:

   - einen Bestimmungsschritt (100), für jedes Intervall $T_i$, von diskreten Erfassungsmöglichkeiten des Gebiets $Z_i$ derart, dass jeder diskreten Erfassungsmöglichkeit ein Datum des Beginns, eingeschlossen in dem Intervall $T_i$, eine Ausführungszeit, eine kinematische lokale Bedingung sowie ein Gewicht zugeordnet sind,

- einen Gruppierungsschritt (200) der diskreten Erfassungsmöglichkeiten der Gebiete $Z_i$ in einer Gruppe D,
- einen Klassifizierungsschritt (300) der diskreten Erfassungsmöglichkeiten der Gruppe D, wobei die Erfassungsmöglichkeiten nach aufsteigendem Datum des Beginns klassifiziert und mit $D^i$ bezeichnet werden,
- einen Bewertungsschritt (400) der kinematischen Kompatibilität zwischen den diskreten Erfassungsmöglichkeiten der Gruppe D, herangezogen paarweise nach ihrer jeweiligen Klassifizierung,
- einen Bestimmungsschritt (500) einer optimalen Sequenz diskreter Erfassungsmöglichkeiten mit einem maximalen Gewicht und kinematisch kompatibel.

2. Verfahren nach Anspruch 1, aufweisend einen Berücksichtigungsschritt (450) von Mehrfacherfassungsanfragen nach den Bewertungsschritt (400) der kinematischen Kompatibilität und vor dem Bestimmungsschritt (500) einer optimalen Sequenz, wobei die jeweiligen Gewichte der diskreten Erfassungsmöglichkeiten, die Gebieten $Z_i$ zugeordnet sind, die eine mehrmals zu erfassen sind, aktualisiert werden, und wobei eine Variable *mustHit* die Verkettung der diskreten Erfassungsmöglichkeiten erzwingt, um die Mehrfacherfassungsanfragen zu erfüllen.

3. Verfahren nach einem der Ansprüche 1 bis 2, wobei der Bestimmungsschritt (500) einer optimalen Sequenz die dynamische Aktualisierung einer Variablen pathMesh aufweist, welche die Gebiete $Z_i$ speichert, die den diskreten Erfassungsmöglichkeiten der optimalen Sequenz zugeordnet sind, so dass die Duplikation diskreter Erfassungsmöglichkeiten von Gebieten verhindert wird, die nur einmal erfasst werden müssen.

4. Verfahren nach einem der Ansprüche 1 bis 3, wobei der Schritt (500) für jede diskrete Erfassungsmöglichkeit $D^i$ der Gruppe D eine Teilauswahl diskreter Erfassungsmöglichkeiten vor $D^i$ in D und kinematisch mit $D^i$ kompatibel aus allen diskreten Erfassungsmöglichkeiten vor $D^i$ in D und kinematisch mit $D^i$ kompatibel aufweist.

5. Verfahren nach einem der Ansprüche 1 bis 4, aufweisend einen Verifizierungsschritt (600) der Einhaltung mindestens einer kumulativen Bedingung, der das Raumfahrzeug unterliegt, wobei der Verifizierungsschritt (600) nach dem Bestimmungsschritt (500) einer optimalen Sequenz erfolgt.

6. Verfahren nach Anspruch 5, wobei die mindestens eine kumulative Bedingung eine Bedingung Speichergröße aufweist.

7. Verfahren nach einem der Ansprüche 5 bis 6, wobei die mindestens eine kumulative Bedingung eine Bedingung verbrauchte elektrische Leistung aufweist.

8. Verfahren nach einem der Ansprüche 5 bis 7, wobei die mindestens eine kumulative Bedingung eine Bedingung maximale Betriebszeit von OnBoard-Instrumenten des Fahrzeugs aufweist.

9. Verfahren nach einem der Ansprüche 5 bis 8, wobei der Verifizierungsschritt (600) der Einhaltung von kumulativen Bedingungen eine dynamische Aktualisierung der optimalen Sequenz durch Unterdrückung diskreter Erfassungsmöglichkeiten aufweist, solange die kumulativen Bedingungen nicht erfüllt sind.

10. Verfahren nach einem der Ansprüche 1 bis 9, wobei die Anfangsdaten der diskreten Erfassungsmöglichkeiten jedes Intervalls $T_i$ gemäß einem konstanten Zeitschritt zeitlich gesampelt werden.

11. Verfahren nach Anspruch 10, wobei die jeweiligen Zeitschritte der Intervalle $T_1$, ..., $T_N$ untereinander gleich sind.

12. Verfahren nach Anspruch 10, wobei die jeweiligen Zeitschritte von mindestens zwei Intervallen $T_i$ und $T_j$ unterschiedlich sind.

13. Verfahren nach Anspruch 10, wobei der Zeitschritt jedes Intervalls $T_i$ derart eingestellt wird, dass das Intervall $T_i$ 20 diskreten Erfassungsmöglichkeiten zugeordnet ist.

14. Verfahren nach einem der Ansprüche 1 bis 13, wobei die kinematische lokale Bedingung einer diskreten Erfassungsmöglichkeit einen Haltungssollwert des Raumfahrzeugs zu Beginn und am Ende der diskreten Erfassungsmöglichkeit aufweist.

15. Verfahren nach einem der Ansprüche 1 bis 14, wobei das Gewicht jeder diskreten Erfassungsmöglichkeit, die einem Gebiet $Z_i$ zugeordnet ist, von der Priorität $p_i$ der Anfrage $R_i$ abhängt, die dem Gebiet $Z_i$ zugeordnet ist.

**16.** Verfahren nach einem der Ansprüche 1 bis 15, wobei jedes Gebiet $Z_i$ einem Qualitätskriterium $w_i$ zugeordnet ist, das von den geometrischen Merkmalen des Gebiets $Z_i$ sowie von den meteorologischen Bedingungen abhängt, die während des Zeitintervalls der visueller Zugänglichkeit $T_i$ vorgesehen sind.

**17.** Verfahren nach Anspruch 16, wobei das Gewicht jeder diskreten Erfassungsmöglichkeit, die einem Gebiet $Z_i$ zugeordnet ist, von der Priorität $p_i$ der Anfrage $R_i$ derart abhängt, dass ein Vektor vorliegt, dessen einzige Komponente ungleich Null gleich dem Qualitätskriterium $w_i$ ist, wobei die Position der Komponente ungleich Null in dem Vektor von der Priorität der Anfrage $R_i$ abhängt.

**18.** Verfahren nach Anspruch 17, wobei die Komponente ungleich Null von dem Qualitätskriterium $w_i$ und von einem Erfassungsinteressenkriterium abhängt, das der diskreten Erfassungsmöglichkeit zugeordnet ist.

**19.** Verfahren nach einem der Ansprüche 17 bis 18, wobei der Bestimmungsschritt (500) einer optimalen Sequenz einen Vergleich der jeweiligen Gewichte der diskreten Erfassungsmöglichkeiten aufweist, die untereinander kinematisch kompatibel sind.

**20.** Verfahren nach einem der Ansprüche 1 bis 19, aufweisend einen Bündelungsschritt (50) von Gebieten der Erde vor dem Bestimmungsschritt (100) diskreter Erfassungsmöglichkeiten.

**21.** Verfahren nach einem der Ansprüche 1 bis 20, wobei das Raumfahrzeug ein Beobachtungssatellit ist, der im Kamm-Modus arbeitet.

**Claims**

**1.** A method for planning the acquisition of images of terrestrial areas $Z_1,...,Z_N$ by a spacecraft on a mission around the Earth following a predetermined traveling orbit, such as an observation satellite for example, each terrestrial area $Z_i$ being associated with a request $R_i$ of priority $p_i$ such that said area $Z_i$ corresponds to a visual accessibility time period $T_i$ along said traveling orbit, **characterized in that** it includes the following successive steps:

- a step (100) of determining, for each period $T_i$, discrete acquisition opportunities for the area $Z_i$ such that a start date that is included in said period $T_i$, a duration of execution, a kinematic local constraint and a weight are associated with each said discrete acquisition opportunity;
- a step (200) of grouping together the discrete acquisition opportunities of areas $Z_i$ into a set D;
- a step (300) of ranking the discrete acquisition opportunities of the set D, the acquisition opportunities being ranked in order of increasing start date and denoted by $D^i$;
- a step (400) of evaluating the kinematic compatibility between said discrete acquisition opportunities of the set D, taken pairwise according to their respective rankings;
- a step (500) of determining an optimum sequence of discrete acquisition opportunities having a maximum weight, and being kinematically compatible.

**2.** The method according to claim 1, including a step (450) of taking multiple acquisition requests into account, subsequent to the step (400) of evaluating the kinematic compatibility and prior to the step (500) of determining an optimum sequence, wherein the respective weights of the discrete acquisition opportunities that are associated with areas $Z_i$ having to be acquired a plurality of times are updated and wherein a variable *mustHit* forces the chaining of said discrete acquisition opportunities to fulfill said multiple acquisition requests.

**3.** The method according to one of claims 1 to 2, wherein the step (500) of determining an optimum sequence includes dynamically updating a variable pathMesh storing the areas $Z_i$ that are associated with the discrete acquisition opportunities of said optimum sequence, so as to prevent the duplication of discrete acquisition opportunities for areas having to be acquired a single time.

**4.** The method according to one of claims 1 to 3, wherein the step (500) includes, for each discrete acquisition opportunity $D^i$ of the set D, a partial selection of discrete acquisition opportunities preceding $D^i$ in D, and which are kinematically compatible with $D^i$, from all of the discrete acquisition opportunities preceding $D^i$ in D, and which are kinematically compatible with $D^i$.

**5.** The method according to one of claims 1 to 4, including a step (600) of verifying that at least one cumulative constraint imposed on said spacecraft is respected, said verification step (600) being subsequent to the step (500) of determining an optimum sequence.

**6.** The method according to claim 5, wherein said at least one cumulative constraint includes a memory size constraint.

**7.** The method according to one of claims 5 to 6, wherein said at least one cumulative constraint includes a consumed electrical power constraint.

**8.** The method according to one of claims 5 to 7, wherein said at least one cumulative constraint includes a maximum operating time constraint for instruments on board said craft.

**9.** The method according to one of claims 5 to 8, wherein the step (600) of verifying that cumulative constraints are respected includes dynamically updating said optimum sequence by removing discrete acquisition opportunities as long as said cumulative constraints are not met.

**10.** The method according to one of claims 1 to 9, wherein the start dates of the discrete acquisition opportunities of each period $T_i$ are sampled over time according to a constant time interval.

**11.** The method according to claim 10, wherein the respective time intervals of the periods $T_1,...,T_N$ are equal to one another.

**12.** The method according to claim 10, wherein the respective time intervals of at least two periods $T_i$ and $T_j$ are different.

**13.** The method according to claim 10, wherein the time interval of each period $T_i$ is adjusted such that said period $T_i$ is associated with 20 discrete acquisition opportunities.

**14.** The method according to one of claims 1 to 13, wherein the kinematic local constraint of a discrete acquisition opportunity includes a setpoint for the attitude of said spacecraft at the start and at the end of said discrete acquisition opportunity.

**15.** The method according to one of claims 1 to 14, wherein the weight of each discrete acquisition opportunity that is associated with an area $Z_i$ depends on the priority $p_i$ of the request $R_i$ that is associated with said area $Z_i$.

**16.** The method according to one of claims 1 to 15, wherein each area $Z_i$ is associated with a quality criterion $w_i$ that is dependent on the geometric features of said area $Z_i$ as well as on the meteorological conditions that are forecast for the visual accessibility time period $T_i$.

**17.** The method according to claim 16, wherein the weight of each discrete acquisition opportunity that is associated with an area $Z_i$ depends on the priority $p_i$ of the request $R_i$ so as to be a vector, the sole non-zero component of which is equal to the quality criterion $w_i$, the position of said non-zero component in said vector depending on the priority of said request $R_i$.

**18.** The method according to claim 17, wherein said non-zero component depends on the quality criterion $w_i$ and on an acquisition advantage criterion that is associated with said discrete acquisition opportunity.

**19.** The method according to one of claims 17 to 18, wherein the step (500) of determining an optimum sequence includes a comparison of the respective weights of the discrete acquisition opportunities that are kinematically compatible with one another.

**20.** The method according to one of claims 1 to 19, including a step (50) of aggregating terrestrial areas, prior to the step (100) of determining discrete acquisition opportunities.

**21.** The method according to one of claims 1 to 20, wherein said spacecraft is an observation satellite operating in pushbroom mode.

Fig 1

Fig 2

50

100

200

300

400

500

Fig 3

100

200

300

400

450

500

Fig 4